# FASCICULE DE BREVET EUROPEEN

(11) **EP 1 861 289 B1**
(45) Date de publication et mention de la délivrance du brevet: **13.07.2011**
(21) Numéro de dépôt: 06726137.0
(22) Date de dépôt: 23.03.2006
(51) Int. Cl.: B60R 7/04, B60R 7/02, B60R 7/06

(54) **DISPOSITIF BISTABLE D'OUVERTURE-FERMETURE, ET COMPARTIMENT DE RANGEMENT LE COMPORTANT**
BISTABILE ÖFFNUNGS-/VERSCHLUSSVORRICHTUNG UND LAGERFACH DAMIT
BISTABLE OPENING/CLOSING DEVICE, AND STORAGE COMPARTMENT COMPRISING SAME

(30) Priorité: 23.03.2005 FR 0502887; 06.06.2005 FR 0505709
(43) Date de publication de la demande: 05.12.2007
(73) Titulaire: Faurecia Interieur Industrie, 92000 Nanterre (FR)
(72) Inventeur: ERCOLANO, Tony, F-60130 Wavignies (FR); PONTHIEU, Didier, F-60480 La Neuville Saint Pierre (FR); GUERREIRO, Pierre, F-95600 Eaubonne (FR); RUMIGNY, Pascal, F-59800 Lille (FR); HERIQUET, Guy, 95120 Saint-Gratien (FR); DANNENHOFFER, Stéphane, F-95590 Nerville la Fôret (FR); HABERT, Cédric, F-60510 Le Fay Saint Quentin (FR)
(74) Mandataire: Domenego, Bertrand
(86) Numéro de dépôt international: PCT/FR2006/000644
(87) Numéro de publication internationale: WO 2006/100390

(56) Documents cités:
- DE-A1- 10 326 883
- FR-A- 2 752 792
- GB-A- 1 148 694

## Description

L'invention concerne un dispositif bistable d'ouverture-fermeture d'un compartiment de rangement, ainsi qu'un tel compartiment.

Le compartiment des passagers d'une automobile moderne comporte de nombreux dispositifs de rangement, placés dans le tableau de bord, dans les panneaux de porte, sur le dossier des sièges, sous les sièges, etc. Certains d'entre eux sont ouverts, et d'autres peuvent être fermés, pour des raisons esthétiques ou de retenue de leur contenu.

Les compartiments de rangement qui peuvent être fermés comportent un dispositif quelconque de fermeture qui est stable en position de fermeture. On peut citer les boîtes à gants qui comportent un couvercle qui peut être fermé et même parfois verrouillé en position de fermeture. On connaît aussi des dispositifs de rangement destinés à des panneaux de porte, dont la position normale est la position fermée.

Ainsi, le document EP-0 899 159 décrit un compartiment de rangement placé à la partie inférieure d'un panneau de porte et dont la paroi extérieure, formée d'un textile à mailles, est tenue à sa partie supérieure par une lame métallique tendue par un ressort. Un utilisateur, pour avoir accès à l'intérieur du compartiment, doit donc écarter la lame du panneau de porte. Dès qu'il la lâche, le bord du compartiment revient en position de fermeture.

Ces dispositifs présentent un inconvénient, car, lorsque l'utilisateur n'a qu'une main libre, par exemple parce qu'il tient le volant, il ne peut pas accéder au compartiment de rangement. Il serait donc souhaitable que ces compartiments de rangement possèdent deux positions de stabilité, l'une fermée, dans laquelle le contenu est retenu à l'intérieur, et une autre dans laquelle une ouverture est dégagée afin qu'un utilisateur puisse introduire ou extraire toutes sortes d'objets.

Le document DE-103 26 883 décrit un dispositif bistable selon le préambule de la revendication 1.

Un dispositif selon l'invention est défini dans la revendication 1, et un compartiment comprenant ce dispositif est défini dans la revendication 9.

L'invention concerne des compartiments de rangement qui possèdent deux positions de stabilité, l'une fermée, dans laquelle le contenu est retenu à l'intérieur et l'aspect extérieur du compartiment de rangement est esthétique, et une autre dans laquelle l'ouverture est largement dégagée. Ces compartiments de rangement comportent un dispositif bistable d'ouverture-fermeture. Ainsi, selon l'invention, un côté mobile de l'ouverture d'accès du compartiment comporte un organe flexible qui possède deux positions de stabilité, obtenues soit par la nature même de l'organe, soit par son montage particulier à l'ouverture du compartiment.

Dans un mode de réalisation, l'organe mobile est allongé et a naturellement deux positions de stabilité à convexités de sens opposés. De préférence, l'organe mobile est une lame dont l'une au moins des extrémités peut coulisser pratiquement dans sa direction longitudinale dans une fente de guidage. Par exemple, la lame est métallique et possède des saillies qui lui donnent ses deux positions de stabilité.

Dans un autre mode de réalisation, l'organe mobile est allongé et a naturellement un seul état stable, et ses deux positions de stabilité lui sont données par tenue de ses deux extrémités en direction longitudinale à deux emplacements séparés par une distance inférieure à la longueur de l'organe mobile.

Dans un exemple de réalisation, l'organe mobile est incompressible longitudinalement, et les deux extrémités sont guidées dans des fentes proches des emplacements de tenue.

Dans un autre exemple de réalisation, l'organe mobile est incompressible longitudinalement, et il prend une forme en S ou Z lorsqu'il passe d'une position de stabilité à l'autre.

Dans un autre exemple de réalisation, l'organe est compressible élastiquement en direction longitudinale. Ainsi, l'organe peut être formé d'un ressort hélicoïdal de section aplatie ou d'une bande élastique rectiligne à éléments sinueux entre ses bords latéraux.

Dans des modes de réalisation avantageux, l'organe mobile est articulé à une extrémité longitudinale au moins par une charnière, par une partie amincie de l'organe mobile proche de l'extrémité, ou par une partie d'un matériau souple de la paroi du compartiment qui entoure l'organe mobile.

L'invention concerne aussi un compartiment de rangement comprenant un dispositif d'ouverture-fermeture selon les paragraphes précédents, dans lequel l'organe fixe est une partie d'une cavité qui délimite une bordure entourant une surface concave du côté du volume de rangement du compartiment, et l'organe mobile est porté par un support ayant une surface qui délimite une partie du volume du compartiment, son bord libre ayant deux positions de stabilité dans l'une desquelles le bord est adjacent à la surface concave de l'organe fixe et dans l'autre desquelles seules les extrémités du bord sont adjacentes à l'organe fixe, de sorte qu'une ouverture est entièrement délimitée entre le bord de l'organe mobile et la surface concave de l'organe fixe.

De préférence, le support de l'organe mobile est formé par un organe sensiblement plat qui délimite une bordure dont une partie solidarise le support et l'organe mobile et une autre partie est libre, la bordure du support étant sensiblement adjacente à la bordure de la cavité de l'organe fixe. Ainsi, le bord de l'organe mobile relie deux emplacements distants de la bordure du support.

La bordure de la cavité peut être sensiblement circulaire ou sensiblement rectangulaire.

De préférence, le support et l'organe mobile sont formés à partir d'un matériau plat, par une étape de découpe d'un trou destiné à délimiter le bord de l'organe mobile et une partie de la bordure du support, et une étape de mise en forme de la partie du matériau plat comprise entre le bord et le reste de la bordure du support, afin qu'elle soit en saillie par rapport au matériau plat.

Il est avantageux que l'étape de mise en forme comprenne un amincissement du matériau plat au niveau du reste de la bordure du support qui ne délimite pas le trou.

De préférence, le bord de l'organe mobile est formé par un renforcement du matériau plat, par exemple obtenu par pliage du matériau plat sur lui-même au niveau du bord.

De préférence, l'organe fixe et sa cavité sont formés à partir d'un matériau plat, par une étape de mise en forme du matériau plat compris à l'intérieur de la bordure afin qu'il soit en saillie par rapport au reste du matériau plat.

L'un au moins des matériaux plats du support et de l'organe mobile d'une part, et de l'organe fixe et de sa cavité d'autre part, est avantageusement un non-tissé. De préférence, le non-tissé contient des fibres d'une matière thermoplastique, et l'étape de mise en forme est effectuée par chauffage du matériau plat à une température supérieure à la température de ramollissement de la matière thermoplastique de ses fibres. Dans un exemple avantageux, le non-tissé comprend des quantités sensiblement égales de fibres de verre et de fibres de matière thermoplastique. La matière thermoplastique est par exemple une polyoléfine, telle que le polypropylène.

Dans des modes de réalisation avantageux, le support de l'organe mobile est une garniture de coffre d'automobile ou une garniture de dossier de siège d'automobile.

Ainsi, le compartiment de rangement selon l'invention présente de nombreux avantages. Sa structure est très simple et très robuste, et elle est obtenue avec un petit nombre d'éléments. En particulier, le compartiment peut être formé dans une garniture de coffre ou de dossier de siège d'automobile avec le matériau qui existe déjà et ne nécessite qu'un organe fixe constituant un fond du compartiment. Il est en outre possible d'obtenir facilement des effets esthétiques divers, allant de la discrétion la plus grande lors de l'utilisation de matériaux de mêmes propriétés pour le fond et l'organe mobile, à des effets divers obtenus par modulation des formes et des couleurs.

D'autres caractéristiques et avantages de l'invention seront mieux compris à la lecture de la description qui va suivre d'exemples de réalisation, faite en référence aux dessins annexés sur lesquels :
la figure 1 est une vue en élévation latérale d'une paroi extérieure d'un compartiment de rangement muni d'une partie d'un dispositif d'ouverture-fermeture selon l'invention ;
la figure 2 est une vue en élévation frontale du dispositif de la figure 1 ;
la figure 3 représente une des positions de stabilité du dispositif de la figure 2 pendant une utilisation ;
la figure 4 représente un exemple de montage d'une variante du dispositif des figures 1 à 3 ;
la figure 5 est un agrandissement d'une partie de fixation du dispositif de la figure 4 ;
la figure 6 représente une lame de ressort destinée à un dispositif selon un autre mode de réalisation de l'invention ;
la figure 7 est une coupe partielle indiquant le montage de la lame de la figure 6 ;
les figures 8, 9 et 10 représentent trois positions d'un compartiment de rangement dans un exemple d'application du dispositif selon l'invention ;
les figures 11 et 12 représentent en perspective un autre mode de réalisation de compartiment de rangement selon l'invention ;
la figure 13 est une vue en perspective d'un exemple de compartiment de rangement selon un mode de réalisation de l'invention, en position ouverte ;
la figure 14 est analogue à la figure 13 mais représente l'organe mobile en position intermédiaire transitoire ;
la figure 15 représente le compartiment des figures 13 et 14 lorsqu'il a été fermé ;
la figure 16 représente deux éléments à partir desquels peut être réalisé un compartiment de rangement tel que représenté sur les figures 13 à 15 ;
les figures 17 et 18 sont des vues en plan d'une variante de compartiment selon l'invention, dans les positions respectives de fermeture et d'ouverture ; et
la figure 19 est une vue en perspective de la partie mobile du compartiment des figures 17 et 18.

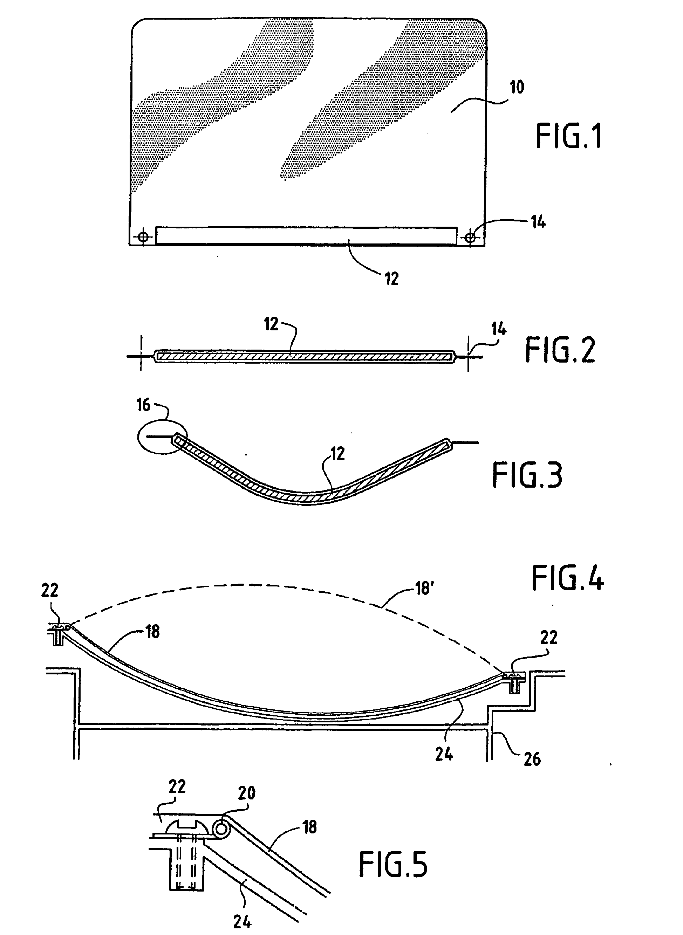

La figure 1 représente sous forme développée une paroi extérieure 10 de compartiment de rangement, formée d'un matériau souple tel qu'un tissu, ayant à un bord une lame élastique 12, avantageusement logée dans un ourlet du bord de la paroi 10. Des orifices 14 placés au-delà des extrémités de la lame sont destinés au passage de dispositifs de fixation, tels que des vis.

Sur la figure 2, on a représenté la lame 12 entre deux couches du matériau souple de la paroi 10, mais sous une forme rectiligne qui n'est pas une position de stabilité de la lame. Comme l'indique la figure 3, la lame prend naturellement l'une de deux positions de stabilité dont l'une est représentée sur la figure 3, l'autre position étant inverse, c'est-à-dire convexe vers le haut, par rapport à la représentation de la figure 3.

On note que, lorsque les orifices 14 sont utilisés pour le passage de dispositifs de fixation, le matériau de la paroi 10 forme une articulation à proximité de l'extrémité de la lame 12, comme indiqué par la référence 16 sur la figure 3.

Lorsque la position de la figure 3 est une position de fermeture, un organe fixe formant l'autre paroi du compartiment de rangement suit alors pratiquement le contour convexe de la lame 12. Lorsque la lame 12 occupe sa position opposée de stabilité, on conçoit qu'une large ouverture est formée entre la lame 12 et l'organe fixe.

La figure 4 représente une variante de réalisation dans laquelle une lame 18 est articulée par des charnières 20 sur des dispositifs de fixation 22 aux extrémités d'un organe fixe 24 de forme arrondie. Cette forme arrondie suit pratiquement la forme de la lame 18 dans l'une de ses deux positions de stabilité, l'organe fixe 24 étant supporté par une ossature telle que 26, par exemple d'un panneau de porte d'automobile.

La figure 4 représente en traits pleins l'une des positions de stabilité de la lame 18 (fermeture) ; celle-ci peut être saisie, de préférence par le milieu, pour être écartée de l'organe fixe 24 et prendre une seconde position de stabilité (ouverture), indiquée en traits interrompus 18' sur la figure 4.

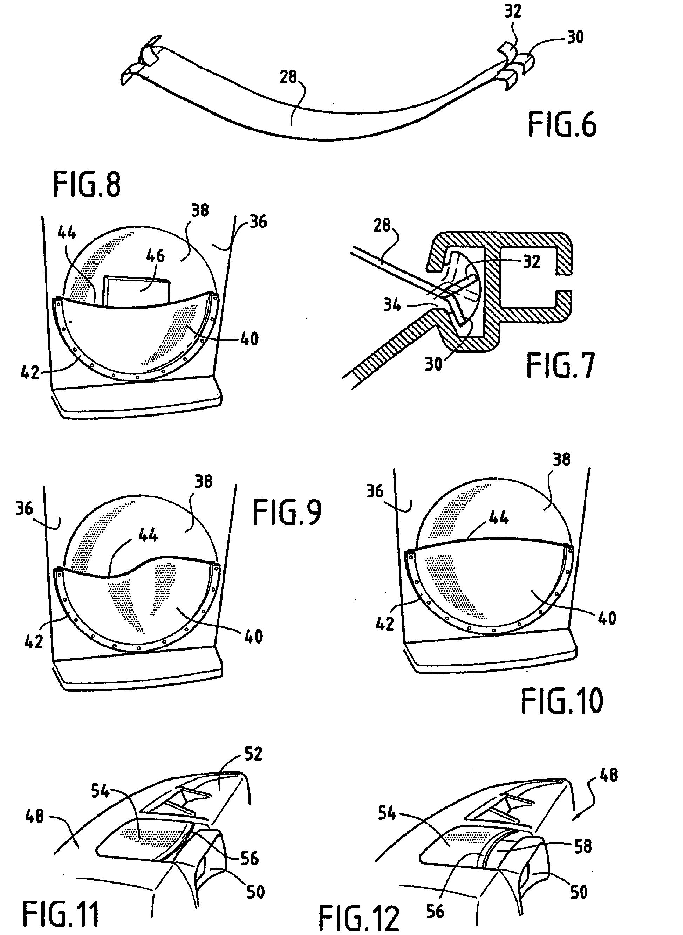

Les figures 6 et 7 représentent un autre mode de réalisation de dispositif d'ouverture-fermeture. Dans celui-ci, l'organe mobile comporte une lame flexible métallique 28, représentée sous forme convexe, ayant à chaque extrémité des doigts 30, 32 destinés à la retenir dans une cavité. La figure 7 indique que, dans sa position d'ouverture, la lame 28 a ses doigts 30, 32 placés à l'intérieur d'une cavité qui débouche par une fente 34. Dans la position de fermeture, la lame prend la position indiquée en traits interrompus, les doigts 30, 32 retenant toujours l'extrémité de la lame 28 à l'intérieur de la cavité.

Dans la variante représentée sur la figure 7, la lame 28 a normalement une position stable rectiligne (contrairement à la représentation de la figure 6). Les doigts 30, 32 ne peuvent pas s'éloigner de la fente de guidage 34 parce qu'ils sont tenus par le fond de la cavité. Grâce à leur forme arrondie, ils glissent sur ce fond et déterminent, entre les cavités des deux extrémités opposées, une longueur inférieure à celle de la lame 28 qui est donc obligée de prendre l'une ou l'autre de deux positions convexes de stabilité, d'un côté ou de l'autre de l'axe reliant les deux cavités.

Dans une autre variante, la lame a naturellement deux positions de stabilité, obtenues par exemple par formation de saillies dans le matériau métallique mince de la lame. Dans ce cas, il n'est pas nécessaire que la cavité ait un fond opposé à la fente 34, puisque la lame a alors naturellement tendance à tirer les doigts 30, 32 vers la fente de guidage 34.

On a décrit trois variantes d'articulation de la lame formant l'organe mobile sur l'organe fixe, une articulation formée par disposition des extrémités d'une lame entre deux couches de textile, une articulation formée par montage de charnières aux extrémités de la lame, et une articulation formée par logement d'une extrémité de lame munie de doigts dans une cavité, derrière une fente de guidage. D'autres types d'articulation peuvent être utilisés, par exemple une articulation formée par une partie amincie de matériau souple de la paroi du compartiment qui entoure l'organe mobile.

On a décrit des lames ayant deux positions de stabilité soit naturelles, soit données par compression, mais ayant toujours une même longueur dans la direction longitudinale. Il est aussi possible d'utiliser un organe mobile qui est compressible élastiquement en direction longitudinale.

Dans un premier exemple, l'organe mobile est formé d'un ressort hélicoïdal de section aplatie, ayant tendance à se déformer dans un plan perpendiculaire à la direction d'aplatissement de sa section. Dans un second exemple, l'organe mobile est une bande élastique rectiligne ayant un élément sinueux entre ses bords latéraux, si bien qu'elle est compressible longitudinalement. Dans un troisième exemple, l'organe mobile est formé d'au moins deux éléments repoussés élastiquement par un ressort qui peut être comprimé lors du passage d'une position de stabilité à l'autre.

On considère maintenant deux exemples d'application de l'invention à un compartiment de passagers d'automobile.

Les figures 8 à 10 représentent un tel compartiment de rangement placé à la partie inférieure d'un panneau de porte. Sur ces figures, la référence 36 désigne un panneau de porte dans lequel est formée une cavité lenticulaire 38. Une paroi 40 en demi-cercle pratiquement est fixée à sa périphérie circulaire en 42 au panneau de porte 36 autour de la cavité 38. Le bord supérieur 44 de la paroi 40 peut prendre la position écartée du panneau 36 représentée sur la figure 8, dans laquelle un objet 46 peut être disposé dans le compartiment de rangement, et la position indiquée sur la figure 10 dans laquelle le bord 44 est venu s'appliquer pratiquement contre la paroi de la cavité lenticulaire 38.

La figure 9 illustre le passage entre les positions des figures 8 et 10. On note que le bord 44 prend une forme en S ou Z en passant d'une position à l'autre.

Les figures 11 et 12 représentent un autre exemple d'application d'un compartiment de rangement selon l'invention. Dans cet exemple, un tableau de bord 48 comporte une partie telle que 50 qui comprend par exemple des instruments qui peuvent être observés par le conducteur. La planche de bord comporte d'autres équipements 52. Derrière la partie 50, un compartiment de rangement ayant une paroi extérieure 54 est formé au-dessus de la planche de bord. Le bord avant de ce compartiment est délimité par un organe mobile 56 qui, sur la figure 11, a une position incurvée vers le bas, pratiquement au contact de la planche de bord. Dans la position de la figure 12, l'organe mobile 56 a été déplacé vers le haut et dégage une ouverture 58 permettant l'introduction d'objets dans le compartiment ou leur extraction.

Dans le cas des figures 11 et 12, les deux positions de stabilité présentent des avantages importants. D'abord, comme le compartiment est disposé horizontalement, il est souhaitable qu'il ait une position fermée stable pour empêcher la sortie des objets placés à l'intérieur. Surtout, comme il est placé à proximité du conducteur qui ne doit pas lâcher le volant, il est avantageux que, d'une seule main, le conducteur puisse ouvrir le compartiment qui reste ouvert pendant que la main du conducteur introduit ou extrait un objet. Cette disposition est donc pratiquement indispensable au point de vue de la sécurité.

Dans un perfectionnement du compartiment des figures 11 et 12, la paroi extérieure 54 peut comporter, à distance du fond et de l'ouverture du compartiment, une lame bistable, par exemple comme envisagé en référence aux figures 1 à 7. Le compartiment peut alors avoir deux parties séparées par la lame.

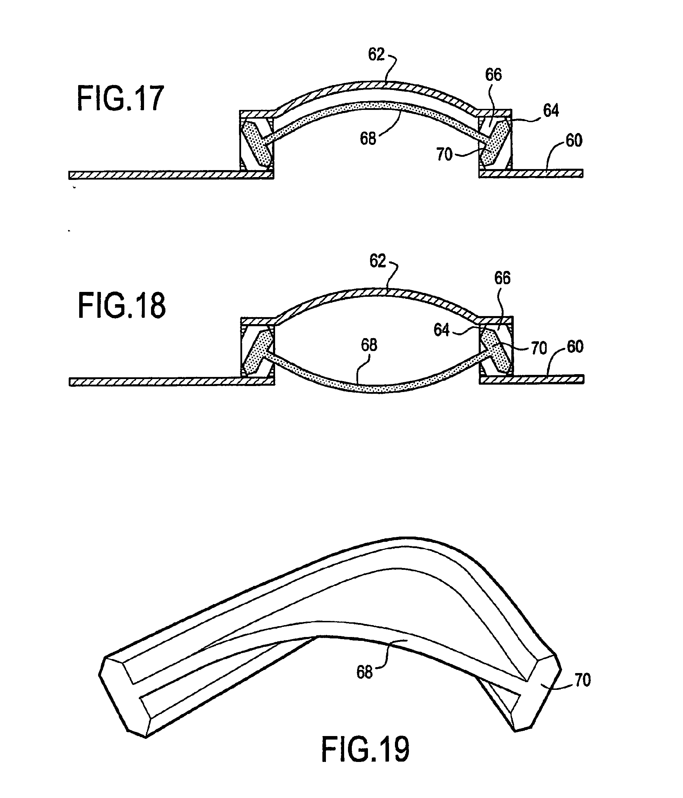

Les figures 17 à 19 représentent une autre variante, analogue aux modes de réalisation des figures 8 à 10 d'une part et 11 et 12 d'autre part. Sur un panneau 60, un support 62, de forme bombée, est tenu par une entretoise 64 qui délimite une cavité 66 de section octogonale. Un organe mobile 68 possède une joue et une bande continue 70 de bord formant un renfort à côtés triangulaires destinés à s'appliquer contre les côtés de la cavité 66, dans les deux positions ouverte et fermée du compartiment.

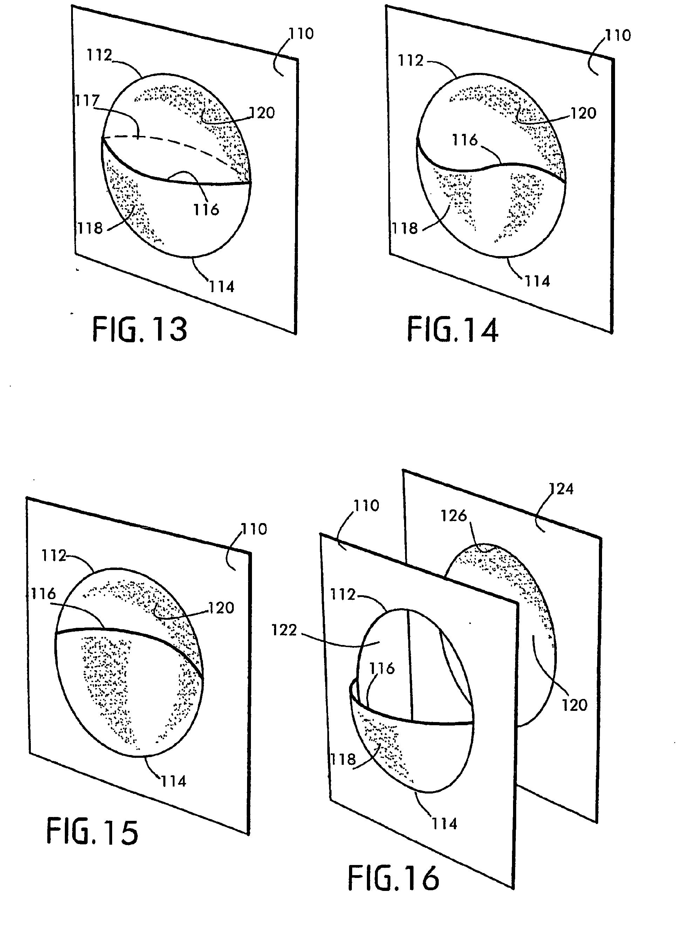

La figure 13 est une vue en perspective représentant un compartiment de rangement selon un autre mode de réalisation de l'invention sous forme ouverte. Plus précisément, une garniture 110, qui peut être une garniture de coffre à bagages ou de dossier de siège d'automobile, est représentée sous forme rectangulaire ; en réalité, elle peut avoir la forme qui convient à sa fonction principale de garniture. Le compartiment de rangement proprement dit est délimité par une bordure 112, 114 qui comprend une partie supérieure de bordure 112 et une partie inférieure de bordure 114. Un bord 116 d'un organe mobile 118 peut se déplacer entre deux positions de stabilité. La position de stabilité d'ouverture du bord 116 est indiquée sur la figure 13, et sa position de stabilité de fermeture est indiquée en trait interrompu par la référence 117 sur la figure 13, ainsi que sur la figure 15. Dans cette position de stabilité de fermeture, le bord 116 est en appui contre le fond 120 du compartiment de rangement.

On note sur la figure 13 que l'organe mobile 118 est en saillie par rapport à la garniture 110 (qui n'est pas nécessairement plane, mais est seulement relativement plate, c'est-à-dire de faible épaisseur, tout en pouvant épouser une forme variant progressivement). Cette partie en saillie formant l'organe mobile 118 est comprise entre la partie inférieure de bordure 114 et le bord 116.

Lorsque le compartiment doit être fermé, une pression est appliquée, par exemple par un doigt, à une partie du bord 116 si bien que celui-ci prend une forme en S, indiquée sur la figure 14, pour passer à la position de la figure 15 dans laquelle le bord 116 est adjacent au fond 120, et de préférence plaqué contre celui-ci par une pression élastique.

La figure 16 représente les deux seuls éléments nécessaires à la constitution du compartiment de rangement des figures 13 à 15. La garniture 110 a un trou 122 formé entre la partie supérieure de bordure 112 et le bord 116 de l'organe mobile. De préférence, au niveau de la partie inférieure de bordure 114, le matériau de la garniture 110 est aminci afin que le fléchissement du matériau soit facile de part et d'autre de la bordure 114.

Le second organe 124 délimite une cavité 120 ayant une surface concave du côté du compartiment. Dans un mode de réalisation avantageux, seul cet élément 124, qui comprend une partie plate juste suffisante pour entourer le fond 120, est placé derrière la garniture 110 de manière que la bordure 126 de la cavité délimitant le fond 120 corresponde à la bordure 112, 114 de la garniture 110.

On a représenté un compartiment de rangement ayant une forme générale circulaire. Cependant, de nombreuses autres formes sont possibles, par exemple polygonales, rectangulaires à coins arrondis, etc., et même en forme de trapèze ou autre convenant à la configuration particulière de la garniture à laquelle est incorporé le compartiment de rangement.

Bien que d'autres matériaux puissent être utilisés, il est avantageux que la garniture 110 au moins, et de préférence l'organe fixe 124 aussi, soient formés d'un non-tissé. Un tel non-tissé contient en partie au moins des fibres de matière thermoplastique permettant d'une part l'obtention de la rigidité nécessaire aux parties de support entourant le fond 120 et l'organe mobile 118, et d'autre part une mise en forme pour la réalisation des saillies constituant le fond 120 et l'organe mobile 118.

Un tel non-tissé peut comporter avantageusement des fibres de verre, en plus des fibres de matière thermoplastique. Dans un exemple, le non-tissé contient des quantités pratiquement égales de fibres de verre et de fibres de matière thermoplastique. La matière thermoplastique peut être avantageusement une polyoléfine, par exemple le polypropylène.

Bien qu'on ait décrit l'utilisation de non-tissé, il est aussi possible d'utiliser d'autres matériaux. Par exemple, l'organe fixe 124 peut être simplement préparé par formage à chaud d'une plaque de matière plastique.

## Revendications

1. Dispositif bistable d' ouverture-fermeture d'un compartiment de rangement, le dispositif étant monté à l'ouverture du compartiment et comprenant :
un organe fixe (24, 38) délimitant un côté d'une ouverture d'accès au compartiment, et
un organe mobile (12, 18, 28, 56), articulé sur l'organe fixe à proximité des extrémités de l'ouverture d'accès, et
les organes fixe et mobile délimitant ensemble la totalité de l'ouverture d'accès, et
l'organe mobile (12, 18, 28, 56) ayant deux positions de stabilité, l'une dans laquelle il est adjacent à l'organe fixe (24, 38), et l'autre dans laquelle seules ses extrémités sont adjacentes à l'organe fixe (24, 38),
**caractérisé en ce que** l'organe mobile est un organe flexible (12, 18, 28, 56).

2. Dispositif selon la revendication 1, **caractérisé en ce que** l'organe mobile (12, 18, 28) est allongé et a naturellement deux positions de stabilité à convexités de sens opposés.

3. Dispositif selon la revendication 2, **caractérisé en ce que** l'organe mobile (28) est une lame dont l'une au moins des extrémités peut coulisser pratiquement dans sa direction longitudinale dans une fente (34) de guidage.

4. Dispositif selon la revendication 3, **caractérisé en ce que** la lame est métallique et possède des saillies qui lui donnent ses deux positions de stabilité.

5. Dispositif selon la revendication 1, **caractérisé en ce que** l'organe mobile (28) est allongé et a naturellement un seul état stable, et ses deux positions de stabilité lui sont données par tenue de ses deux extrémités en direction longitudinale à deux emplacements séparés par une distance inférieure à la longueur de l'organe mobile.

6. Dispositif selon la revendication 5, **caractérisé en ce que** l'organe mobile (28) n'est pas longitudinalement compressible, et les deux extrémités sont guidées dans des fentes (34) proches des emplacements de tenue.

7. Dispositif selon la revendication 5, **caractérisé en ce que** l'organe mobile (28) n'est pas longitudinalement compressible, et il prend une forme en S ou Z lorsqu'il passe d'une position de stabilité à l'autre.

8. Dispositif selon l'une quelconque des revendications 5 à 7, **caractérisé en ce que** l'organe mobile (12, 18, 28) est articulé à une extrémité longitudinale au moins par un élément choisi parmi une charnière, une partie amincie de l'organe mobile proche de l'extrémité, et une partie d'un matériau souple de la paroi du compartiment qui entoure l'organe mobile.

9. Compartiment de rangement comprenant un dispositif d'ouverture-fermeture selon l'une quelconque des revendications précédentes, **caractérisé en ce que** l'organe fixe est une partie d'une cavité qui délimite une bordure entourant une surface concave du côté du volume de rangement du compartiment, et l'organe mobile (118) est porté par un support (110) ayant une surface qui délimite une partie du volume du compartiment, son bord libre (116) ayant deux positions de stabilité dans l'une desquelles le bord est adjacent à la surface concave de l'organe fixe et l'autre desquelles seules les extrémités du bord (16) sont adjacentes à l'organe fixe, de sorte qu'une ouverture est entièrement délimitée entre le bord (16) de l'organe mobile et la surface concave de l'organe fixe (24).

10. Compartiment selon la revendication 9, **caractérisé en ce que** le support (110) de l'organe mobile (118) est formé par un organe sensiblement plat qui délimite une bordure (112, 114) dont une partie (114) solidarise le support (110) et l'organe mobile (118) et une autre partie (112) est libre, la bordure (112, 114) du support (110) étant sensiblement adjacente à la bordure (126) de la cavité de l'organe fixe.

11. Compartiment selon l'une des revendications 9 et 10, **caractérisé en ce que** le support (110) et l'organe mobile (118) sont formés à partir d'un matériau plat, par une étape de découpe d'un trou (122) destiné à délimiter le bord (116) de l'organe mobile et une partie (112) de la bordure du support, et une étape de mise en forme de la partie du matériau plat comprise entre le bord (116) et le reste (114) de la bordure du support, afin qu'elle soit en saillie par rapport au matériau plat.

12. Compartiment selon la revendication 11, **caractérisé en ce que** l'étape de mise en forme comprend un amincissement du matériau plat au niveau du reste de la bordure (114) du support (110) qui ne délimite pas le trou.

13. Compartiment selon l'une des revendications 11 et 12, **caractérisé en ce que** le bord (116) de l'organe mobile (118) est formé par un renforcement du matériau plat.

14. Compartiment selon la revendication 13, **caractérisé en ce que** le renforcement du matériau plat est obtenu par pliage du matériau plat sur lui-même au niveau du bord (116).

15. Compartiment selon l'une quelconque des revendications 9 à 14, **caractérisé en ce que** l'organe fixe (124) et sa cavité sont formés à partir d'un matériau plat, par une étape de mise en forme du matériau plat compris à l'intérieur de la bordure (126) afin qu'il soit en saillie par rapport au reste du matériau plat.

16. Compartiment selon l'une quelconque des revendications 11 à 15, **caractérisé en ce que** l'un au moins des matériaux plats du support (110) et de l'organe mobile (118) d'une part, et de l'organe fixe (124) et de sa cavité d'autre part, est un non-tissé.

17. Compartiment selon la revendication 16, **caractérisé en ce que** le non-tissé contient des fibres d'une matière thermoplastique, et l'étape de mise en forme est effectuée par chauffage du matériau plat à une température supérieure à la température de ramollissement de la matière thermoplastique de ses fibres.

18. Compartiment selon l'une quelconque des revendications 9 à 17, **caractérisé en ce que** le support (110) de l'organe mobile (118) est une garniture choisie parmi les garnitures de coffre à bagages et les garnitures de dossier de siège d'automobile.

## Claims

1. Stowage compartment opening/closing bistable device, the said device being fitted at the compartment opening and comprising:
a fixed element (24, 38) defining one side of an opening for access to the compartment, and
a moveable element (12, 18, 28, 56), articulated with the fixed element close to the ends of the access opening, and
the fixed and moveable elements together defining all of the access opening, and
the moveable element (12, 18, 28, 56) having two positions of stability, one in which it is adjacent to the fixed element (24, 38) and the other in which only its ends are adjacent to the fixed element (24, 38), **characterised in that** the moveable element is a flexible element (12, 18, 28, 56).

2. Device according to claim 1, **characterised in that** the moveable element (12, 18, 28) is elongated and naturally has two positions of stability with convexities in opposite directions.

3. Device according to claim 2, **characterised in that** the moveable element (28) is a strip, at least one end of which can slide practically in its longitudinal direction in a guiding slot (34).

4. Device according to claim 3, **characterised in that** the strip is metal and has projections which give it its two positions of stability.

5. Device according to claim 1, **characterised in that** the moveable element (28) is elongated and naturally has one single stable state, and its two positions of stability are given to it by the holding of its two ends in the longitudinal direction in two places separated by a distance smaller than the length of the moveable element.

6. Device according to claim 5, **characterised in that** the moveable element (28) is not longitudinally compressible, and the two ends are guided in slots (34) close to the holding places.

7. Device according to claim 5, **characterised in that** the moveable element (28) is not longitudinally compressible and it takes on an S or Z shape when it moves from one position of stability to the other.

8. Device according to any of claims 5 to 7, **characterised in that** the moveable element (12, 18, 28) is articulated at one longitudinal end at least by an element chosen from a hinge, a thinned down portion of the moveable element close to the end, and a portion of a flexible material of the wall of the compartment which surrounds the moveable element.

9. Stowage compartment comprising an opening/closing device according to any of the preceding claims, **characterised in that** the fixed element is a portion of a cavity which defines a rim surrounding a concave surface of the side of the stowage volume of the compartment, and the moveable element (118) is carried by a support (110) having a surface which defines a portion of the volume of the compartment, its free edge (116) having two positions of stability in one of which the edge is adjacent to the concave surface of the fixed element and in the other one of which only the ends of the edge (16) are adjacent to the fixed element, so that an opening is entirely defined between the edge (16) of the moveable element and the concave surface of the fixed element (24).

10. Compartment according to claim 9, **characterised in that** the support (110) of the moveable element (118) is formed by a substantially flat element which defines a rim (112, 114), a portion (114) of which secures the support (110) to the moveable element (118) and another portion (112) is free, the rim (112, 114) of the support (110) being substantially adjacent to the rim (126) of the cavity of the fixed element.

11. Compartment according to claim 9 or 10, **characterised in that** the support (110) and the moveable element (118) are formed from a flat material by a stage of cutting out a hole (122) intended for defining the edge (116) of the moveable element and a portion (112) of the rim of the support, and a stage of forming the portion of the flat material included between the edge (116) and the rest (114) of the rim of the support, in order that it is protruding with respect to the flat material.

12. Compartment according to claim 11, **characterised in that** the forming stage comprises a thinning down of the flat material of the rest of the rim (114) of the support (110) which does not define the hole.

13. Compartment according to claim 11 or 12, **characterised in that** the edge (116) of the moveable element (118) is formed by a strengthening of the flat material.

14. Compartment according to claim 13, **characterised in that** the strengthening of the flat material is obtained by folding the flat material on itself at the edge (116).

15. Compartment according to any of claims 9 to 14, **characterised in that** the fixed element (124) and its cavity are formed from a flat material, by a stage of forming the flat material included inside the rim (126) in order that it is protruding with respect to the rest of the flat material.

16. Compartment according to any of claims 11 to 15, **characterised in that** at least one of the flat materials of the support (110) and of the moveable element (118) on one hand and of the fixed element (124) and of its cavity on the other hand is a non-woven fabric.

17. Compartment according to claim 16, **characterised in that** the non-woven fabric contains fibres of a thermoplastic material and the forming stage is carried out by heating the flat material to a temperature higher than the softening temperature of the thermoplastic material of its fibres.

18. Compartment according to any of claims 9 to 17, **characterised in that** the support (110) of the moveable element (118) is upholstery chosen from car boot upholsteries and car seat back upholsteries.

## Patentansprüche

1. Bi-stabile Öffnungs- und Schließvorrichtung eines Faches, welche Vorrichtung an der Öffnung des Faches angebracht ist und ein feststehendes Organ (24,38) umfasst, das eine Seite einer Zugangsöffnung zu dem Fach begrenzt, und ein bewegliches Organ (12,18,28,56), das gelenkig an dem feststehenden Organ in der Nähe der Enden der Zugangsöffnung angebracht ist, wobei das feststehende und das bewegliche Organ gemeinsam die Gesamtheit der Zugangsöffnung bilden und wobei das bewegliche Organ (12,18,28,56) zwei stabile Positionen aufweist, in deren einer sie sich angrenzend an das feststehende Organ (24,38) befindet und in der anderer lediglich die Enden angrenzend an das feststehende Organ (24,38) liegen, **dadurch gekennzeichnet, dass** das bewegliche Organ ein flexibles Organ (12,18,28,56) ist.

2. Vorrichtung nach Anspruch 1, **dadurch gekennzeichnet, dass** das bewegliche Organ (12,18,28) langgestreckt und mit zwei stabilen Positionen mit entgegengesetzter Konvexität versehen ist.

3. Vorrichtung nach Anspruch 2, **dadurch gekennzeichnet, dass** das bewegliche Organ (28) eine Lamelle ist, die sich mit wenigstens einem ihrer Enden in Längsrichtung in einem Führungsschlitz (34) verschieben lässt.

4. Vorrichtung nach Anspruch 3, **dadurch gekennzeichnet, dass** die Lamelle aus Metall besteht und Vorsprünge besitzt, die der Lamelle zwei Positionen der Stabilität verleihen.

5. Vorrichtung nach Anspruch 1, **dadurch gekennzeichnet, dass** das bewegliche Organ (28) langgestreckt ist und nur einen stabilen Zustand aufweist, und dass die beiden Positionen der Stabilität verliehen werden durch Halt der beiden Enden in Längsrichtung in zwei getrennten Positionen mit einem Abstand, der geringer ist als die Länge des beweglichen Organs.

6. Vorrichtung nach Anspruch 5, **dadurch gekennzeichnet, dass** das bewegliche Organ (28) in Längsrichtung nicht kompressibel ist und dass die beiden Enden geführt sind in den Schlitzen (34) in zwei in Abstand liegenden Haltepunkten.

7. Vorrichtung nach Anspruch 5, **dadurch gekennzeichnet, dass** das bewegliche Organ (28) in Längsrichtung nicht kompressibel ist und dass es eine Form eines S oder Z annimmt, während es sich von einer Stabilitätsposition zur anderen bewegt.

8. Vorrichtung nach einem der Ansprüche 5 bis 7, **dadurch gekennzeichnet, dass** das bewegliche Organ (12,18,28) an einem Längsende schwenkbar ist in Bezug auf ein Element, das gewählt wird aus einem Gelenkelement, einem verkleinerten Bereich des beweglichen Organs in der Nähe des Endes, und einem weichen Material der Wand, die das bewegliche Organ umgibt.

9. Ablagefach mit einer Öffnungs- und Schließvorrichtung nach einem der vorhergehenden Ansprüche, **dadurch gekennzeichnet, dass** das feststehende Organ Teil einer Ausnehmung ist, die eine Umrandung begrenzt, die eine konkave Oberfläche des Inhalts des Ablagefachs umgibt, und dass das bewegliche Organ (118) getragen ist durch eine Stützvorrichtung (110), die eine Oberfläche bildet, die einen Teil des Faches einnimmt, wobei der freie Rand (116), der zwei stabile Positionen aufweist, in deren einer der Rand angrenzend an die konkave Oberfläche des feststehenden Organs ist und deren andere nur die Enden des Randes (16) angrenzend an das feststehende Organ betrifft, derart, dass eine Öffnung vollständig begrenzt ist zwischen dem Rand (16) des beweglichen Organs und der konkaven Oberfläche des feststehenden Organs (24).

10. Ablagefach nach Anspruch 9, **dadurch gekennzeichnet, dass** die Stützvorrichtung (110) des beweglichen Organs (118) gebildet wird durch ein im wesentlichen flaches Organ, das begrenzt ist durch eine Umrandung (112,114), die mit einem Teil (114) die Stützvorrichtung (110) und das bewegliche Organ (118) verbindet und mit einem anderen Teil (112) frei ist, wobei die Umrandung (112,114) der Stützvorrichtung (110) im wesentlichen angrenzend an die Umrandung (126) des Hohlraums des feststehenden Organs und ein anderes Teil (112) frei ist, wobei die Umrandung (112,114) der Stützvorrichtung (110) im wesentlichen angrenzend an die Umrandung (126) des Hohlraums des feststehenden Organs angeordnet ist.

11. Ablagefach nach einem der Ansprüche 9 und 10, **dadurch gekennzeichnet, dass** die Stützvorrichtung (110) und das bewegliche Organ (118) gebildet werden aus flachem Material durch Einschneiden eines Loches (122), das bestimmt ist zum Begrenzen eines Randes (116) des beweglichen Organs und einen Teil (112) der Umrandung der Stützvorrichtung und einen Schritt der Herstellung eines Teils des flachen Materials zwischen dem Rand (116) und dem Rest (114) der Umrandung der Stützvorrichtung, so dass ein Vorsprung in Bezug auf das flache Material gebildet wird.

12. Ablagefach nach Anspruch 1, **dadurch gekennzeichnet, dass** der Abschnitt des Herstellens eine Verkleinerung des flachen Materials in Höhe der Umrandung (114) der Stützvorrichtung (110) umfasst, die das Loch begrenzt.

13. Ablagefach nach einem der Ansprüche 11 und 12, **dadurch gekennzeichnet, dass** der Rand (116) des beweglichen Organs (118) gebildet wird durch eine Verstärkung des flachen Materials.

14. Ablagefach nach Anspruch 13, **dadurch gekennzeichnet, dass** eine Verstärkung des flachen Materials erhalten wird durch Falten des flachen Materials auf sich selbst.

15. Ablagefach nach einem der Ansprüche 9 bis 14, **dadurch gekennzeichnet, dass** das feststehende Organ (124) und dessen Hohlraum gebildet sind aus flachem Material durch einen Schritt des Formens des flachen Materials innerhalb der Umrandung (126) zur Bildung eines Vorsprungs in Bezug auf den Rest des flachen Materials.

16. Ablagefach nach einem der Ansprüche 11 bis 15, **dadurch gekennzeichnet, dass** wenigstens das flache Material der Stützvorrichtung (110) und des beweglichen Organs (118) einerseits und des feststehenden Organs (124) und dessen Hohlraum andererseits nicht gefaltet ist.

17. Ablagefach nach Anspruch 16, **dadurch gekennzeichnet, dass** das nicht gefaltete Teil Fasern aus thermoplastischem Material enthält und der Schritt des Formens durchgeführt wird durch Erwärmen des flachen Materials auf eine Temperatur oberhalb einer Erweichungstemperatur des thermoplastischen Materials und dessen Fasern.

18. Ablagefach nach einem der Ansprüche 9 bis 17, **dadurch gekennzeichnet, dass** die Stützvorrichtung (110) des beweglichen Organs (118) eine Garnitur ist, die gewählt ist zwischen den Garnituren für einen Kofferraum und die Garnituren für den Sitz eines Automobils.
